# EUROPÄISCHE PATENTANMELDUNG

(11) **EP 1 117 036 A2**
(43) Veröffentlichungstag der Anmeldung: **18.07.2001**
(21) Anmeldenummer: 00126997.6
(22) Anmeldetag: 08.12.2000
(51) Int. Cl.: G06F 9/46, H04L 29/06, H04L 12/28, H04Q 7/22

(54) **Verfahren und Vorrichtung zum Zugriff auf ein Ad-hoc-Telekommunikationsnetz**

(30) Priorität: 12.01.2000 DE 10000946
(71) Anmelder: SIEMENS AKTIENGESELLSCHAFT, 80333 München (DE)
(72) Erfinder: Frank, Michael, Dr., 81371 München (DE); Rieken, Ralf, Dr., 81674 München (DE)

(57) **Zusammenfassung**

Der Zugriff von einem Endgerät wird erweitert, in dem auf das Ad-hoc Telekommunikationsnetz, und dessen zugänglichen Dienste, nicht nur direkt aus diesem Netz (lokal) zugegriffen werden kann, sondern auch über beliebige Zugriffsnetze.
So können beispielsweise in einem GSM Netz (bzw. einem GSM Endgerät) Mehrwertdienste anderer Netze, wie des Internets, bereit gestellt werden, was bislang überhaupt nicht oder nur unter großen Einschränkungen möglich war.

## Beschreibung

### Fachgebiet der Erfindung

Telekommunikationsnetze werden heutzutage in der Regel zentral administriert. Fügt man ein neues Netzelement hinzu, so muß sichergestellt sein, daß es sich mit den bereits vorhandenen Netzelementen "versteht", also die richtige Schnittstelle zum Netz und die richtigen Treiber hat.
Ein Schritt in der Entwicklung der Telekommunikationsnetze ist daher die Weiterentwicklung des sogenannten "Plug & Play" in Form der sogenannten "Ad-Hoc-Netze".
Eine Beschreibung dieses neuartigen Netztyps, der in der Zukunft sicher an Bedeutung gewinnen wird, findet sich beispielsweise in dem Artikel "Geistreiche Verbindungen, Intelligente Geräte in dezentralen Netzen". Momentan sind verschiedene Firmen dabei, diese Mechanismen zu realisieren, wie HP (mit dem Produkt jetSend), Lucent (Inferno) und auch Microsoft (UPnP, Universal Plug 'n Play, hier siehe z. B. http://www.upnp.org) entwickeln ähnliche Systeme.
Im folgenden werden in den Ausführungsbeispielen die Jini™ Mechanismen der Firma Sun Microsystems beschrieben. Dies soll jedoch keine Einschränkung für die erfindungsgemäßen Mechanismen darstellen.

### Stand der Technik

Die Architektur und Mechanismen von Jini™ werden in dem Technical White Paper "Jini™ Architectural Overview" von Sun Microsystems beschrieben.
Ad-hoc Netze, wie das von Jini™, zeichnen sich dadurch aus, daß Netzelemente, und damit auch die von ihnen angebotene Dienste, beliebig in ein Netz eingefügt und wieder aus diesem entfernt werden können.
Unter Diensten versteht man hier allgemein eine Instanz, die von einer Person, einem Programm oder einem anderen Dienst benutzt werden kann. Es kann sich um Hardware, Software, Filter, einen Kommunikationskanal, Speicherplatz und vieles andere mehr handeln. Zur Durchführung eines Auftrags können viele einzelne Dienste erforderlich sein.
Die zentrale Steuerung wird durch sogenannte schwarze Bretter (Blackboards) übernommen. Netzelemente können dem schwarzen Brett ihre Existenz und ihre Fähigkeiten mitteilen (Join) und nach Diensten suchen, die Fähigkeiten anbieten können (lookup, discovery). Für die Benutzung der Dienste wird ein Leasing-Mechanismus angeboten, hier wird zwischen den beteiligten Instanzen eine Benutzungsdauer vereinbart, nach deren Ablauf die Ressourcen des benutzten Dienstes wieder freigegeben werden.
Die Kommunikation zwischen Diensten kann mittels Java Remote Method Invocation (RMI™) erfolgen.

Die von Jini™ beschriebenen Verfahren funktionieren derzeit innerhalb eines lokalen Ad-Hoc-Telekommunikationsnetzes.

Aufgabe der Erfindung ist es, ein Verfahren und eine Vorrichtung anzugeben, die das Benutzen von Diensten in Ad-Hoc-Telekommunikationsnetzen verbessert.

### Darstellung der Erfindung

Diese Aufgabe wird gelöst durch ein Verfahren gemäß Patentanspruch 1 und eine Vorrichtung gemäß Patentanspruch 5.
Der Zugriff von einem Endgerät wird erweitert, in dem auf das Ad-hoc Telekommunikationsnetz, und dessen zugänglichen Dienste, nicht nur direkt aus diesem Netz (lokal) zugegriffen werden kann, sondern auch über beliebige Zugriffsnetze.

Die damit verbundenen Vorteile werden in den weiter unten beschriebenen Szenarien klar. So können beispielsweise in einem GSM Netz (bzw. einem GSM Endgerät) Mehrwertdienste anderer Netze, wie des Internets, bereit gestellt werden, was bislang überhaupt nicht oder nur unter großen Einschränkungen möglich war.

Vorteilhafte Ausgestaltungen und Weiterbildungen sind in den Unteransprüchen angegeben.
Besonders vorteilhaft für die Erfindung ist es, wenn es sich bei dem ersten Ad-Hoc Netz um ein Corporate LAN oder entsprechendes IP Netz handelt. Dieses stellt Internet-Dienste zur Verfügung. Die Verwaltung dieser Dienste kann mit Jini™ oder ähnlichem geschehen.
Das Endgerät, mit dem auf die Dienste zugegriffen werden soll, muß in diesem Fall "Jini-fähig" sein, also beispielsweise eine sogenannte "Virtual Machine" (VM) enthalten.

### Kurzbeschreibung der Zeichungen

Im folgenden wird die Erfindung anhand von Ausführungsbeispielen erläutert. Dabei zeigen
- Figur 1: einen schematischen Aufbau eines beispielhaften Netzes, in dem das erfindungsgemäße Vorgehen angewendet wird,
- Figur 2: einen weiteren schematischen Aufbau eines beispielhaften Netzes, bei dem weitere Anwendungen dargestellt sind, und
- Figur 3: einen bereits als Stand der Technik bekannten schematischen Aufbau eines Ad-Hoc Netzes mit darin angemeldeten Beispiel-Diensten.

### Beschreibung der bevorzugten Ausgestaltungsformen

Jini™ steuert die Verwaltung von Resourcen remote genutzter Dienste über Blackboards.

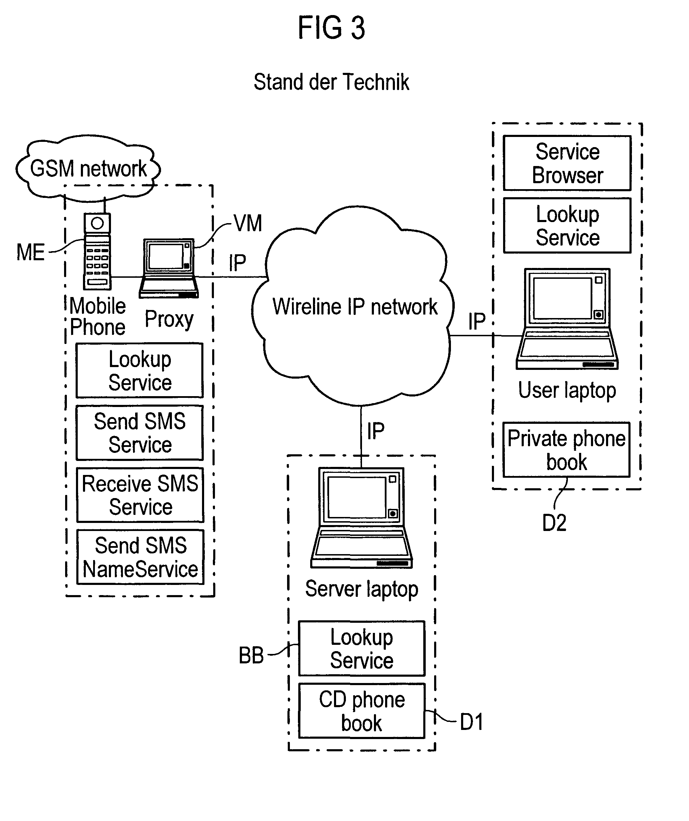

Figur 3 stellt ein beispielhaftes Szenario eines Ad-Hoc Netzes vor, um gleichzeitig die Prinzipien von Ad-Hoc Netzen und den dabei angebotenen Diensten zu verdeutlichen. Ein Dienstnehmer Mobile Phone (ME) möchte beispielsweise einen Dienst Phone Book Service nutzen. Es gibt derzeit in dem Ad-Hoc Netz zwei dieser Dienste: CD phone book (D1) und Private phone book (D2). Beide sind bei einem Lookup Service (BB) eingebucht und können durch den Service Browser von dem Dienstnehmer gesucht werden.
Die angebotenen Dienste können von ganz unterschiedlicher Natur sein, es handelt sich beispielsweise um
- einen Photo-Dienst,
- einen Druck-Dienst,
- einen Scan-Dienst,
- Mobilfunkdienste (wie SMS),
- und vieles andere mehr.
Diese Dienste werden von Endgeräten unterschiedlicher Natur bereitgestellt:
- Fax-Gerät,
- Drucker,
- Scanner,
- Digitale Kamara,
- Mobil-Telefon,
- Computer, Laptop, Handheld, Organizer...
Diese Endgeräte wiederum können sich außer in dem Ad-Hoc Netz (hier ein wireline IP Network, beispielsweise realisiert auf Basis von Siemens I-Gate IEEE 802.11 WLAN 2Mbit peer to peer) noch eine Verbindung in weitere Netze haben:
- Mobilfunknetz (GSM network),
- herkömmliches Telefonnetz PSTN,
- ATM usw.

Ein Kunde möchte nun beispielsweise aus einem Telefonbuch eine Telefonnummer heraussuchen und an diese Nummer eine SMS versenden. Hierfür muß er verschiedene Dienste in Anspruch nehmen. Zuerst wird mittels eines Service Browsers über einen Lookup Service der gewünschte Dienst gesucht. Der Benutzer muß nun den geeigneten Dienst auswählen (nach beliebigen Kriterien, beispielsweise handelt es sich bei dem einen Telefonbuch um seine Privaten Kontakte, und bei dem anderen um Dienstliche, oder um ein offizielles Telefonbuch).
Der Zugriff auf die einzelnen Dienste geschieht über ein Blackboard (in der Figur nicht dargestellt). Die Dienste können als Jini-Dienste angeboten werden. Jini bietet dafür zusätzlich ein Transportsystem von Bedienoberflächen (Interfaces). Während der eigentliche Dienst die SMS über das Mobilfunknetz absetzt, benötigt das Endgerät einen zusätzlichen Anschluß an das Ad-Hoc Netz, welcher eben nicht über GSM geschieht, sondern über eine IP-Verbindung.

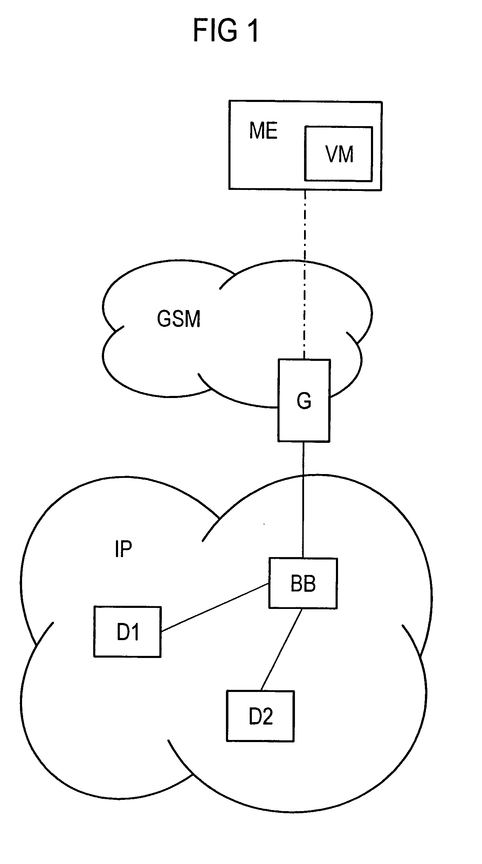

Figur 1 stellt nun die erfindungsgemäße Ausführungsform dar. Die beiden Dienste "CD phone book" D1 und "Private phone book" D2 stehen dem Benutzer wieder in dem Ad-Hoc Netz IP zur Verfügung. Dieses ist beispielsweise ein Corporate LAN, wobei das Private Phone Book sich auf einem Organizer befindet und das "CD phone book" über Intranet eine Telefonnummern-Datenbank sämtlicher Mitarbeiter darstellt. Die Dienste sind, wie bereits bekannt, über ein Blackboard BB eingebucht und können von dem Benutzer gesucht und aufgerufen werden. Der Benutzer befindet sich jedoch nicht direkt in dem Ad-Hoc Netz, sondern ist über ein zweites Netz (hier das Mobilfunknetz GSM) und eine "IP-over-GSM"-Verbindung mit einem GSM/IP-Gateway verbunden, über welches er mit dem Ad-Hoc Netz und damit mit dem Blackboard kommunizieren kann. Voraussetzung ist also, daß den Endgeräten in dem Corporate GSM Netz eine IP Verbindung so zur Verfügung steht und die Endgeräte ME selber (in diesem Beispiel) Jini™ fähig sind (Jini Virtual Machine VM), so ermöglicht Jini eine standardisierte Schnittstelle für GSM Endgeräte zum Zugriff auf beliebige Internet-Dienste im Corporate LAN IP. Jini™ reduziert den Administrationsaufwand der Dienste im LAN erheblich und sorgt zugleich dafür, daß über Selektion der Dienstattribute, der Anwender je nach örtlicher Lage beispielsweise mit dem Druck Dienst des nächsten Drukkers verbunden wird. Auch stellt Jini™ sicher, daß neue Dienste mit neuen Schnittstellen von den GSM Endgeräten aufgerufen werden können.

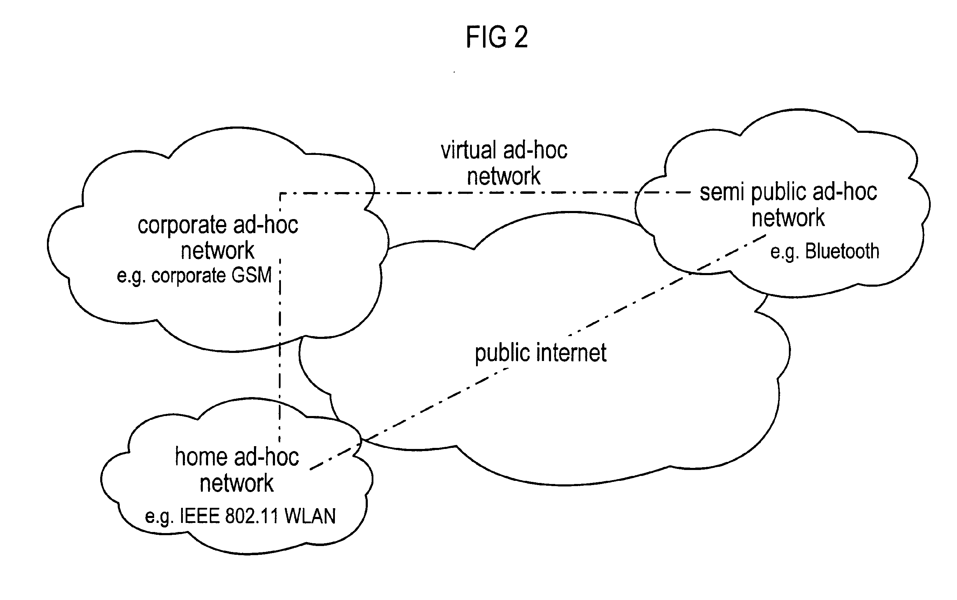

Figur 2 ist ein weiteres Beispiel, wie verschiedene Netze, darunter Ad-Hoc Netze und wie in Figur 1 beschrieben, ein Nicht-IP Netz, wie ein Corporate GSM Netz, miteinander verbunden sind, über ein Nicht-Ad-Hoc Netz wie das Internet, und dabei ein virtuelles Ad-Hoc Netz bilden. Die Verbindungen zwischen den einzelnen unterschiedlichen Netzen bilden geeignete Gateways, die entsprechende Protokollumsetzungen realisieren.

### Literaturverzeichnis

"Geistreiche Verbindungen, Intelligente Geräte in dezentralen Netzen", Claudia Piemont, c't 20/1998, Seite 198 - 202.

"JINI™ Architectural Overview", Technical White Paper,
SUN microsystems, January 1999
(beispielsweise zu finden unter http://www.sun.com/jini/)

## Patentansprüche

1. Verfahren zum Zugriff auf in einem erstes Ad-Hoc-Telekommunikationsnetz (IP) angebotene Dienste,
wobei dieses Ad-Hoc-Telekommunikationsnetz (IP) selbstkonfigurierend ist und aus einer Vielzahl von Netzelementen und Diensten (D1, D2) besteht, die verteilt in diesem ersten Telekommunikationsnetz existieren und die sich mit dafür eigens vorgesehenen Mechanismen in dieses erste Netz selber einbuchen und wieder ausbuchen können,
von einem Endgerät (ME) über ein zweites, von dem ersten Netz verschiedenes, Telekommunikationsnetz (GSM), welches mit dem ersten Netz über ein geeignetes Netzelement (G) verbunden ist.

2. Verfahren nach Patentanspruch 1,
dadurch gekennzeichnet, daß
das erste Ad-Hoc-Telekommunikationsnetz (IP) ein TCP/IP Netz ist.

3. Verfahren nach Patentanspruch 1,
dadurch gekennzeichnet, daß
das zweite, von dem Ad-Hoc-Telekommunikationsnetz (IP) unterschiedliche Telekommunikationsnetz ein GSM Netz ist.

4. Verfahren nach einem der vorherigen Patentansprüche,
dadurch gekennzeichnet, daß
die Verwaltung der Dienste in dem ersten Ad-Hoc-Telekommunikationsnetz (IP) mit Jini™ oder UPnP geschieht.

5. Vorrichtung zum Zugriff auf in einem ersten, selbstkonfigurierenden Ad-Hoc-Telekommunikationsnetz (IP) verteilt angebotene Dienste (D1, D2)
von einem Endgerät (ME) über ein zweites, von dem ersten Netz verschiedenes, Telekommunikationsnetz (GSM),
mit Mitteln (BB), die eine Verwaltung der Dienste (Dl, D2) sicherstellt, und bei denen sich die Dienste in geeigneter Weise selber an- und abmelden können, und
mit Mitteln, die das erste Netz mit dem zweiten Netz verbinden,

6. Vorrichtung nach Patentanspruch 5,
dadurch gekennzeichnet, dass
das Endgerät Mittel (VM) enthält, welche für den Zugriff auf die Dienste des ersten Ad-hoc Telekommunikationsnetzes (IP) geeignet sind.
